# EUROPEAN PATENT SPECIFICATION

(11) **EP 4 215 837 B1**
(45) Date of publication and mention of the grant of the patent: **11.09.2024**
(21) Application number: 22152898.7
(22) Date of filing: 24.01.2022
(51) Int. Cl.: F24H 3/04, B60H 1/22, F24H 3/08, F24H 3/10, H05B 3/00, F24H 9/00, F24H 1/00, F24H 9/1818, F24H 9/1863, H05B 3/06, H05B 3/24

(54) **AN ELECTRIC FLUID HEATER**
ELEKTRISCHER FLÜSSIGKEITSERHITZER
APPAREIL ÉLECTRIQUE DE CHAUFFAGE DE FLUIDE

(43) Date of publication of application: 26.07.2023
(73) Proprietor: VALEO SYSTEMES THERMIQUES, 78320 Le Mesnil Saint-Denis (FR)
(72) Inventor: GAS, Pierre-Louis, 78320 Le Mesnil-Saint-Denis (FR); DECOOL, Laurent, 78320 Le Mesnil-Saint-Denis (FR); KARAASLAN, Serif, 78320 Le Mesnil-Saint-Denis (FR)
(74) Representative: Valeo Systèmes Thermiques

(56) References cited:
- WO-A1-2013/087671
- WO-A1-2019/169502
- CN-A- 102 226 571
- CN-A- 110 748 943
- DE-A1- 102011 003 296
- US-A1- 2020 079 180

## Description

### FIELD OF THE INVENTION

The present invention relates to a heat exchanger, particularly to an electrical heater for a vehicle.

### BACKGROUND OF THE INVENTION

A vehicle generally includes a heater for heating air to be supplied to a passenger compartment. Alternatively, the heater is used to supply heated air to demist or defrost the windscreen. In some cases, the heater is used to supply hot air or hot coolant for cold starting the engine. With the emergence of the electric vehicles, the heater is also applicable for battery thermal management. The heaters can be used for efficient thermal management of the batteries used for powering the electric motor, thereby drastically enhancing the service life of the batteries. The air to be heated is generally passed through a heat exchanger, which includes a heating element such as for example, heat exchange flow pipes through which a heated fluid circulates in case of thermal heater or an electrical resistive element supplied with current in case of an electrical resistive heater. Particularly, the air to be heated circulates across the heat exchanger and extracts heat from the heating element.

The electrical heater includes a plurality of heating elements arranged with respect to fluid heating spaces configured with respect to the heating elements for heat exchange between the fluid flowing through fluid heating spaces and the heating elements. Each heating element includes a tube that receives an electrical core therein. Specifically, the tube together with the electrical core forms the heating element. The electrical core for example comprises PTC (Positive Temperature Coefficient) resistors. Each tube may have several electrical cores, which may be arranged one after the other in a direction of the tube. Each heating element includes electrodes on both sides of the at least one electrical core for power supply through the heating element. The electrodes and electrical cores are comprised in heat generation portions of the heating elements. Further, the heating elements include electrically insulating and thermally conductive material layers. The layers being located between one of the electrodes and walls of the tube. In this way, the tube is electrically insulated from the electrodes and the electrical core but thermally in contact with them.

Documents WO2019/169502 A1, DE 10 2011 003296 A1, US 2020/079180 A, WO 2013/087671 A1, CN 102 226 571 B and CN 110 748 943 A disclose such electrical fluid heaters, according to the preamble of claim 1.

The fluid heating spaces are either defined by a housing enclosing the heating elements or by a plurality of modular elements, particularly, plates that are assembled to define the fluid heating spaces with respect to the heating elements. The fluid heating spaces are in fluid communication with an inlet and an outlet. Particularly, the fluid entering the electrical heater through the inlet flows through the fluid heating spaces configured adjacent to the heating elements and in the process extracts heat from the heating elements. The fluid after extracting heat from the heating elements egresses through the outlet. However, the fluid flowing through the fluid heating spaces so configured fails to directly contact the heating elements. Further, air pockets that detrimentally impact the efficiency and performance of the electric heater. Indeed, air is acting as a thermal isolator and hot spots on the heating elements can arise. In case the fluid heating spaces are defined by joining a plurality of plates, the brazing of the plates is an issue.

Accordingly, there is a need for an electric heater that ensures uniform distribution of the heat exchange fluid along the surface of the heater element even when the heater element is of substantially large size. Further, there is a need for an electric heater configured with fluid heating spaces that ensures sufficient heat exchange between the heater element and the fluid flowing through the fluid heating spaces, thereby improving efficiency and performance of the electric heater. Still further, there is a need for an electric heater that ensures convenient brazing connection between the plates configuring the fluid heating spaces with respect to the heating element by homogenizing the brazing temperature and avoiding thermal stresses.

An object of the present invention is to provide an electrical fluid heater that obviates the problems faced by conventional electrical fluid heaters due to non-uniform fluid distribution with respect to the heating element.

Still another object of the present invention is to provide an electrical fluid heater that ensures homogeneous fluid distribution and fluid filling in all the fluid flow passes to achieve improved efficiency and performance.

Yet another object of the present invention is to provide an electrical fluid heater that prevents formation of air pockets within the electric heater.

Still another object of the present invention is to provide an electrical fluid heater that ensures convenient brazing connection between plates configuring fluid flow passes with respect to the heating element by homogenizing the brazing temperature and avoiding thermal stresses.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

### SUMMARY OF THE INVENTION

An electrical fluid heater includes a fluid inlet and a fluid outlet, at least one heating elements and a plurality of plates. The plurality of plates are stacked to form a fluid flow path between the fluid inlet and the fluid outlet for the fluid to be heated by the at least one heating element. The at least one heating element being sandwiched between adjacent plates thereby defining fluid heating spaces from either sides of the at least one heating element to permit heat exchange between the fluid flowing through the fluid heating spaces and the at least one heating element. Each of the plates includes at least one opening, in particular formed on a substantial portion thereof, such that the fluid flowing through the fluid heating spaces is in direct contact with the heating elements.

Generally, the plates includes fluid circulation sections, at least one section formed with a corresponding opening.

Further, the electrical fluid header includes a first end plate and a second end plate. The first end plate includes a first portion and a second portion. The first portion of the first end plate is corresponding to first fluid circulation sections of the plates and is formed with the inlet, whereas, the second portion of the first end plate is corresponding to the second fluid circulation sections of the plates and is formed with the outlet. The first fluid circulation sections of the plates define fluidly coupled first fluid flow passes that receive fluid from the inlet for heat exchange with the heating elements and the second fluid circulation sections of the plates define fluidly coupled second fluid flow passes that delivers fluid to the outlet after heat exchange with the heating elements.

Generally, the electrical fluid header includes a plurality of heating elements. Each heating elements being sandwiched between adjacent plates thereby defining fluid heating spaces from either sides of the at least one heating element.

Preferably, at least one heating element includes a heat generation portion enclosed inside a tube and a wall for the tube is also defining the fluid flow spaces and is in direct contact with the fluid flowing through the fluid heating spaces.

Generally, the tube is a metal extruded tube and an electrical isolating material electrically isolates the heat generation portion from the tube.

Generally, the periphery of the at least one opening formed on the plate is brazed on the tube wall on one side of the heating element and the periphery of the opening formed on the adjacent plate is brazed on the tube wall on another side of the heating element, thereby sealing closing the fluid heating spaces.

Preferably, the first opening and the second opening of the plate are separated and in fluid isolation with respect to each other by means of a rib, the rib cooperates with another adjacent plate, thereby defining the different fluid circulation sections of the plate.

Specifically, the at least one opening covers at least 50 percent, in particular 70 percent and preferably 80 percent of the plate.

Particularly, the first openings on adjacent plates forming the fluid heating spaces with respect to the corresponding heating element are aligned with respect to each other.

Similarly, the second openings on adjacent plates forming the fluid heating space with respect to the corresponding heating element are aligned with respect to each other.

Further, the first openings and the second openings on adjacent plates include rib portions formed along periphery thereof to facilitate brazing connection between the adjacent plates.

### BRIEF DESCRIPTION

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates an isometric view of an electrical fluid heater in accordance with an embodiment of the present invention;
FIG. 2 illustrates an exploded view of the electrical fluid heater of FIG. 1;
FIG. 3 illustrates an isometric view of a first end plate of the electrical fluid heater of FIG. 1;
FIG. 4 illustrates an isometric view of a heating element in accordance with an embodiment of the present invention;
FIG. 5 illustrates an isometric view of a plate of a pair of adjacent plates defining at least a portion of a fluid flow pass;
FIG. 6 illustrates an isometric view of the adjacent plate of the pair of adjacent plates, wherein the adjacent plate in conjunction with the plate of FIG. 5 defines at least a portion of the fluid flow pass.

The present invention envisages an electrical fluid heater, particularly, a high temperature coolant heater, hereinafter, simply referred to as a fluid heater. The fluid heater includes a fluid inlet and a fluid outlet, at least one heating element and a plurality of plates. The plurality of plates are stacked to form a fluid flow path between the fluid inlet and the fluid outlet for the fluid to be heated by the at least one heating element. The at least one heating element being sandwiched between adjacent plates thereby defining fluid heating spaces from either sides of the at least one heating element to permit heat exchange between the fluid flowing through the fluid heating spaces and the at least one heating element. Each of the plates includes at least one opening, in particular formed on a substantial portion thereof, such that the fluid flowing through the fluid heating spaces is in direct contact with the heating elements. Although, the present invention is explained in the forthcoming description and the accompanying drawings, with the example of high temperature coolant heater, however, the present invention is applicable for any other heat exchanger, for use in vehicular or non-vehicular applications and where it is required to arrange the plates and heating elements with respect to each other to configure fluid flow pass between the fluid inlet and the fluid outlet and fluid heating space to permit heat exchange between the fluid flowing through the fluid heating spaces and the at least one heating element and where high thermal efficiency is required to be achieved by improving fluid contact with the heating element and convenient to configure brazing connection is required between the various elements configuring the high voltage coolant heater.

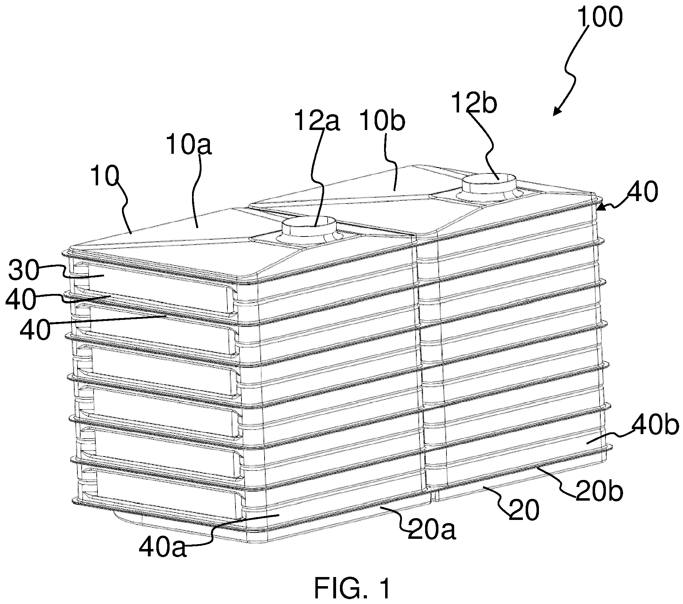

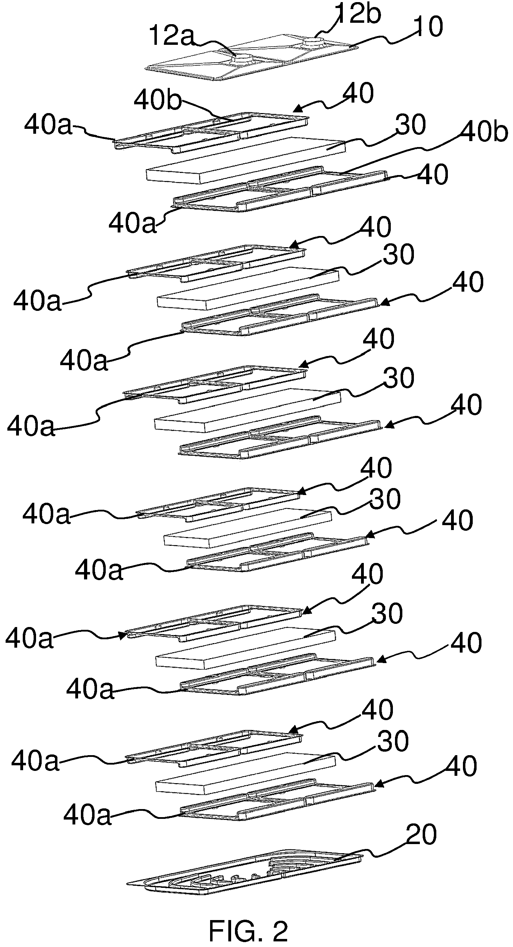

FIG. 1 illustrates an isometric view of an electric fluid heater 100, hereinafter referred to as fluid heater 100, in accordance with an embodiment of the present invention. In accordance with an embodiment, the electric fluid heater is a high voltage coolant heater and the electric fluid heater of the present invention is explained in the forthcoming description and drawings with the example of the high voltage coolant heater. The fluid heater 100 includes a pair of end plates 10 and 20, at least one heating element 30, preferably a plurality of heating elements 30 and a plurality of plates 40, wherein each plate 40 is formed of different sections 40a and 40b. FIG. 2 illustrates an exploded view of the fluid heater 100 and the arrangement in which the different elements of the fluid heater 100 are arranged and assembled with respect to each other.

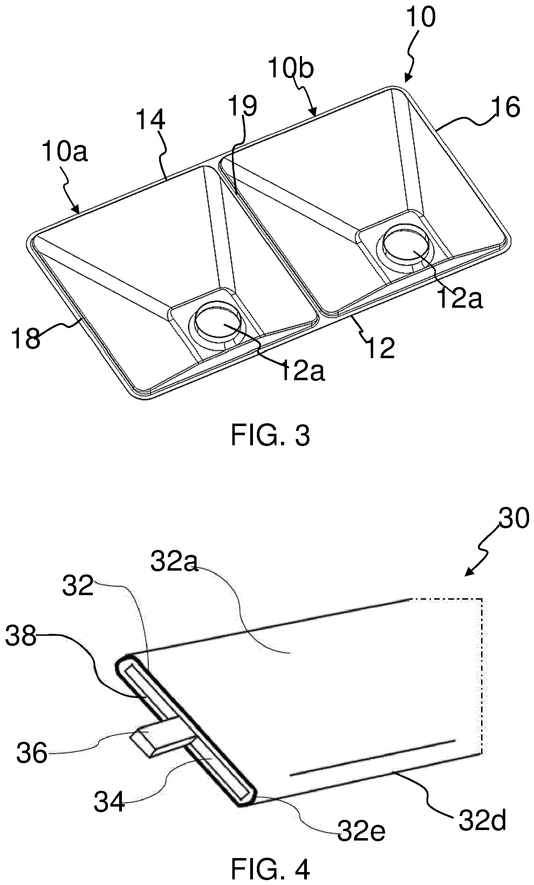

FIG. 3 illustrates an isometric view of the first end plate 10 of the pair of end plates 10 and 20. The first end plate 10 is defined by the opposite longer walls 12 and 14 and the pair of opposite shorter walls 16 and 18. The opposite longer walls 12 and 14 are also referred to as first and second longer walls 12 and 14. The opposite shorter walls 16 and 18 are also referred to as first and second shorter walls 16 and 18. The opposite longer walls 12 and 14 and the opposite shorter walls 16 and 18 define the periphery of the first end plate 10 and at least a portion of the fluid flow pass corresponding to the first end plate 10. The first end plate 10 of the pair of end plates 10 and 20 includes a first portion 10a formed with an inlet 12a for ingress of fluid into and a second portion 10b formed with an outlet 12b for egress of fluid out of the fluid heater 100 from same side of the electrical fluid heater 100. The first portion10a and the second portion 10b are separated by a groove 19 and are in fluid isolation with each other. Such configuration of the inlet 12a and the outlet 12b formed on the same side of the electric fluid heater 100 causes the fluid to follow a U-turn trajectory between the inlet 12a and the outlet 12b. Further, the first portion 10a of the first end plate 10 is corresponding to the first fluid circulation sections 40a of the plates 40 whereas, the second portion 10b of the first end plate 10 is corresponding to the second fluid circulation sections 40b of the plates 40. The first portion 10a of the first end plate 10 distributes fluid received from the inlet 12a to a portion of the first fluid flow pass defined by the first fluid circulation sections of the plates 40 for heat exchange with the corresponding portion of the heating elements 30. The second portion 10b collects the fluid that had passed through second fluid flow pass and undergone heat exchange with the corresponding portion of the heating elements 30 and directs the fluid to the outlet 12b for egress of the fluid. The first fluid flow pass defined by the first portion 40a of the plate 40 and the second fluid flow pass defined by the second portion 40b of the plate 40 together define a fluid flow path between the inlet 12a and the outlet 12b. Such configuration of the inlet 12a and the outlet 12b formed on the same side of the fluid heater 100 provide several advantages. For example, configuring the inlet 12a and the outlet 12b on the same side of the fluid heater 100 provides compact configuration to the fluid heater 100 and addresses packaging issues. Further, such configuration also addresses routing issues associated with routing of inlet and outlet conduits connected to the inlet 12a and the outlet 12b for supplying and delivering out fluid from the fluid heater 100.

The cross section of the first portion 10a is increasing from the inlet 12a towards the first fluid flow passes defined by the first fluid circulation sections 40a. Referring to the FIG. 1, the inlet 12a is disposed at the center of the first portion 10a and proximal to the longer walls 12 of the first end plate 10. Such strategic placement of the inlet 12a ensures even distribution of the coolant to the portion of the fluid flow passes defined by the first fluid circulation sections 40a. Similarly, the second portion 10b corresponding to the second fluid circulation sections 40b of the plates 40 and is converging from the second fluid circulation sections 40b to the outlet 12b in the fluid flow direction. Specifically, the cross section of the second portion 10b is decreasing from the second fluid flow passes defined by the second fluid circulation sections 40b towards the outlet 12b. Further, again referring to the FIG. 1 and FIG. 3, the outlet 12b is also disposed at the center of the second portion 10b and proximal to the longer walls 12 of the first end plate 10. In accordance with another embodiment of the present invention, the outlet 12b is disposed at the corner of the first end plate 10 defined at the intersection of the first longer wall 12 and the first shorter wall 16. Specifically, the outlet 12b is farthest from the groove 19. Such strategic placement of the outlet 12b ensures that the portion of the fluid flow passes defined by the second fluid circulation sections 40b of the plates 40 is filled before the fluid egresses through the outlet 12b. More specifically, such strategic placement of the outlet 12b ensures even distribution of the coolant in the fluid flow passes defined by the second fluid circulation sections 40b before egressing through the outlet 12b. Such configuration of the outlet avoids trapping air in the area beneath the second portion and the fluid flow passes defined by the second fluid circulation sections 40b by scavenging the fluid evenly underneath the second portion 10b of the first end plate 10. In another embodiment, the outlet 12b can be disposed horizontally instead of being disposed vertically the to reduce back-pressure and improve flow path. However, the present invention is not limited to any particular configuration of the first end plate 10 with the inlet 12a and the outlet 12b in any particular position. The inlet and the outlet can be positioned on the first and the second potions so as to avoid air trapping by scavenging the fluid evenly underneath the first and second portions 10a and 10b respectively based position of the openings 41 a and 41b formed on the plates 40. The openings 41a and 41 b are generally disposed beneath and aligned to the inlet 12a and the outlet 12b respectively. Similar to the first end plate 10, the second end plate 20 is formed with different portions 20a and 20b. The first portion 20a and the second portion 20b of the second end plate 20 is corresponding to the first fluid circulation sections 40a and the second fluid circulation sections 40b of the plates 40 and the first portion 10a and the second portion 10b of the first end plate 10.

The second end plate 20 is formed with different portions 20a and 20b that are in fluid communication with each other unlike the first and the second portions 10a and 10b of the first end plate that are in fluid isolation with each other. Particularly, the second end plate 20 fluidly couples the first and the second fluid flow passes formed adjacent to the respective heating elements 30 and in fluid communication with the inlet 12a and the outlet 12b respectively.

FIG. 4 illustrates an isometric view of the heating element 30 of the plurality of heating elements 30. The plurality of heating elements 30 extend along the end plates 10 and 20. Each of the heating elements 30 is sandwiched between adjacent plates 40, thereby defining fluid heating spaces from either sides of the at least one heating element. The fluid heating spaces are configured either on one side of the heating element 30 or one both sides of the heating element 30. The at least one heating element 30 includes a heat generation portion 34 enclosed inside a tube 32. The tube 32 is a metal extruded tube and an electrical isolating and thermally conductive material layer 38 electrically isolates the heat generation portion 34 from the tube 32. Each heating element 30 includes electrodes 36 on both sides for power supply through the heating element 30. The layers 38 being located between one of the electrodes 36 and walls 32a and 32b of the tube 32. In this way, the tube 32 is electrically insulated from the electrodes 36 and the electrical core 34 but thermally in contact with them. The walls 32a and 32b of the heating element 30 is in direct contact with the fluid flowing through the fluid heating space.

Each plate 40 includes a pair of opposite longer walls 42 and 44, a pair of opposite shorter side portions 46 and 48, at least one rib 49, a first opening 41a and a second opening 41b.

Each plate 40 is formed into different sections 40a and 40b corresponding to the different portions 20a and 20b of the second end plate 20 and the different portions 10a and 10b of the first end plate 10. The first fluid circulation sections 40a of the plates 40 defines fluidly coupled first fluid flow passes. In the assembled configuration of the plates 40, the first fluid flow passes receive fluid distributed thereto by the first portion 10a of the first end plate 10 from the inlet 12a for heat exchange with at least a portion of the heating elements 30 sandwiched between the plates 40. Also, the second fluid circulation sections 40b of the plates 40 define fluidly coupled second fluid flow passes. The second flow passes deliver fluid to the second portion 10b of the first end plate 10 for egress through the outlet 12b after heat exchange with the heating elements 30 in the assembled configuration of the plates 40. The plates 40 are positioned and assembled to each other by using first positioning elements 42b, 44b and corresponding second positioning elements 42c, 44c formed on the adjacent plates 40.

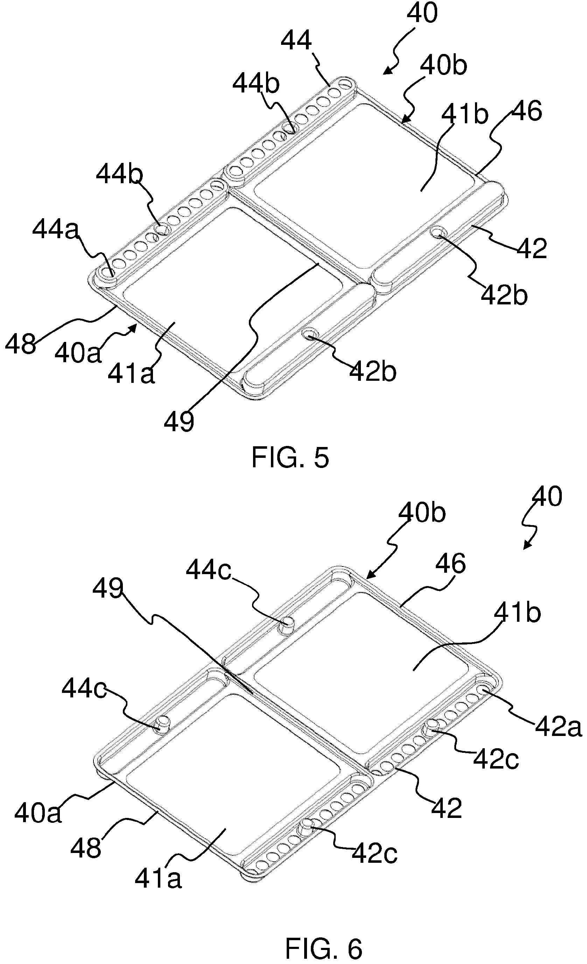

FIG. 5 and FIG. 6 illustrates isometric views of the adjacent plates 40. FIG. 5 illustrates an isometric view of the plate 40 of a pair of adjacent plates defining at least a portion of a fluid flow pass. FIG. 6 illustrates an isometric view of the adjacent plate of the pair of adjacent plates, wherein the adjacent plate in conjunction with the other plate of the pair of adjacent plates arranged in axial direction with respect to each other defines at least a portion of the fluid flow pass. Each plate 40 includes a pair of opposite longer walls 42 and 44, hereinafter referred to as the first and the second longer walls 42 and 44 respectively, a pair of opposite shorter side portions 46 and 48, hereinafter, referred to as first and second shorter side portions 46 and 48 respectively. The pair of opposite shorter side portions 46 and 48 in conjunction with the pair of opposite longer walls 42 and 44 define the periphery of the plate 40 that defines at least a portion of the fluid flow pass defined by the adjacent plates 40. Each longer wall 42, 44 of the pair of opposite longer walls 42 and 44 is formed with separate portions corresponding to the first and second fluid circulation sections 40a and 40b of the plate 40.

The pair of opposite longer walls 42 and 44 are formed with portions corresponding to the first and the second fluid circulation sections 40a and 40b of the plate 40. The portions of the plate 40 proximal to opposite longer walls 42 and 44 formed with fluid inlet or outlet manifolds that are fluidically in communication with a corresponding fluid heating space defined by openings 41a and 41b formed on the plate 40 and the corresponding heating element 30. Either one of the fluid inlet or outlet manifolds being formed with apertures 42a and 44a for either one of ingress in a corresponding fluid inlet manifold defined by the plate 40 in conjunction with the adjacent plate 40 and egress of fluid from a corresponding fluid outlet manifold defined by the plate 40 in conjunction with the adjacent plate 40. The apertures 42a or 44a that are configured on the first plate adjacent to the first end plate 10a are in fluid communication with the inlet 12a. The pair of opposite shorter side portions 46 and 48 in conjunction with the pair of opposite longer walls 42 and 44 define the periphery of the plate 40 that define at least a portion of the fluid flow pass corresponding to the plate 40.

Again referring to the FIG. 1, the plurality of the plates 40 are so stacked with respect to the heating elements 30 that a pair of adjacent plates 40 form at least a portion of fluid flow path. The pair of adjacent plates are separated with respect to each other by at least one heating element 30 to define fluid heating spaces. More specifically, the pair of adjacent plates 40 form at least a portion of the fluid flow path configuring fluid communication between the inlet 12a and the outlet 12b and also define the fluid heating spaces in conjunction with the corresponding heating element 30. The fluid heating spaces permit heat exchange between the fluid flowing through the fluid heating spaces and the at least one heating element 30, More specifically, the pair of adjacent plates 40 in conjunction with walls 32a of the corresponding tube 32 of the heating element 30 defines the fluid heating spaces between the tube 32 and one of the adjacent plates 40. Particularly, the walls 32a of the tube 32 defines and is in contact with fluid heating spaces disposed adjacent to the tube 32.

For positioning the adjacent plates 40 with respect to each other, one of the adjacent plates 40 is formed with first positioning element 42b, 44b that engage with corresponding second positioning elements 42c, 44c formed on the adjacent plates 40 to position and assemble the plate 40 with respect to the adjacent plates 40.

Further, each of the plates 40 includes at least one corresponding opening 41a, 41b. In particular, each of the plates 40 includes sections 40a and 40b, wherein at least one section 40a, 40b is formed with a corresponding opening 41a, 41b. The first opening 41a and the second opening 41b are separated and in fluid isolation with respect to each other by means of the rib 49, the rib 49 cooperates with another adjacent plate 40, thereby defining the different sections 40a and 40b of the plate 40. The rib 49 also supports the heating element 30 sandwiched between the adjacent plates 40. The corresponding opening 41a, 41b is formed on a substantial portion of the corresponding section 40a, 40b of plate 40. More specifically, the at least one opening 41a, 41b covers at least 50 percent, in particular 70 percent and preferably 80 percent of the plate 40. However, the size of the openings 41a, 41b is not limited to be equal to any particular proportion of the plate 40 and the openings 41a, 41b can be as big as possible to improve heat transfer to the coolant while still considering minimum brazing area requirements to achieve a proper sealing/contact. The first openings 41a on adjacent plates 40 forming the fluid heating spaces with respect to the corresponding heating element 30 are aligned with respect to each other. Similarly, the second openings 41b on adjacent plates 40 forming the fluid heating space with respect to the corresponding heating element 30 are aligned with respect to each other. Generally, the first openings 41a formed on the first fluid circulation sections 40a of the plates are aligned with respect to each other and the second openings 41b formed on the second fluid circulation sections 40b of the plates 40 are aligned with respect to each other. Further, the first opening 41a and the second opening 41b are symmetric about the rib 49.

The first openings 41a and the second openings 41b on adjacent plates 40 are in fluid communication with the corresponding apertures 44a and 42a formed on the first and second fluid circulation sections 40a and 40b of the adjacent plates 40 respectively. Generally, the apertures 44a and 42a are formed alternately on the opposite longer walls 44 and 42 of each pair of the adjacent plates 40 to define zigzag fluid flow path between the inlet 12a and the outlet 12b and permit fluid communication between the fluid heating spaces defined by the adjacent plates 40. With such configuration, the fluid flowing through the fluid heating spaces is in direct contact with the heating elements 30, thereby preventing formation of air pockets or dead zones within the electric fluid heater 100 and improving the thermal efficiency of the electric fluid heater 100.

Again referring to the Figures, at least two of the plates 40 define the fluid flow path or circulation path for circulation of the fluid adjacent to the at least one heating element 30 while still allowing direct contact of the fluid with the heating element 30 through the at least one opening 41a, 41b formed on the plate to hold the at least one heating element 30. The at least two plates cooperate to hold the at least one heating element. Such configuration of the first and second fluid circulation sections 40a and 40b of the plates 40 configured with the openings 41a and 41b that are in fluid communication with the apertures 44a and 42a configures fluid heating spaces that permits efficient heat exchange between the fluid flowing through the fluid heating spaces and the heating element 30 by causing the fluid in the fluid heating spaces to be in directly contact the heating elements 30. The plates 40 are configured with ribs around the openings 41a and 41b to conveniently configure brazing connection between the adjacent plates 40 and between the plates 40 and the corresponding heating element 30 by homogenizing the brazing temperature and avoiding thermal stresses. Particularly, the periphery of the at least one opening 41a, 41b is brazed on the tube 32 on one side thereof and the periphery of the opening 41a, 41b formed on the adjacent plate 40 on another side thereof.

In any case, the invention cannot and should not be limited to the embodiments specifically described in this document, as other embodiments might exist. The invention shall spread to any equivalent means and any technically operating combination of means as defined in the claims.

## Claims

1. An electrical fluid heater (100) comprising
• a fluid inlet (12a) and a fluid outlet (12b);
• at least one heating element (30)
• a plurality of plates (40) stacked to form a fluid flow path between the fluid inlet (12a) and the fluid outlet (12b) for the fluid to be heated by the at least one heating element, the at least one heating element (30) being sandwiched between adjacent plates (40) thereby defining fluid heating spaces from either sides of the at least one heating element to permit heat exchange between the fluid flowing through the fluid heating spaces and the at least one heating element (30),
**characterized in that** each of the plates (40) comprise at least one opening (41a, 41b), in particular formed on a substantial portion thereof, such that the fluid flowing through the fluid heating spaces is in direct contact with the heating elements (30).

2. The electrical fluid heater (100) as claimed in the previous claim, wherein at the plates (40) comprise fluid circulation sections (40a,40b), at least one section (40a, 40b) being formed with a corresponding opening (41a, 41b).

3. The electrical fluid heater (100) as claimed in the previous claim further comprising a first end plate (10) and a second end plate (20), wherein the first end plate (10) comprises a first portion (10a) and a second portion (10b), the first portion (10a) of the first end plate (10) is corresponding to first fluid circulation sections (40a) of the plates (40) and is formed with the inlet (12a) whereas, the second portion (10b) of the first end plate is corresponding to the second fluid circulation sections (40b) of the plates (40) and is formed with the outlet (12b) ), wherein the first fluid circulation sections (40a) of the plates (40) define fluidly coupled first fluid flow passes adapted to receive fluid from the inlet (12a) for heat exchange with the heating elements (30) and the second fluid circulation sections (40b) of the intermediate plates (40) define fluidly coupled second fluid flow passes adapted to deliver fluid to the outlet (12b) after heat exchange with the heating elements (30).

4. The electrical fluid heater (100) as claimed in any of the preceding claims comprising a plurality of heating elements (30), each heating elements (30) being sandwiched between adjacent plates (40) thereby defining fluid heating spaces from either sides of the at least one heating element.

5. The electrical fluid heater (100) as claimed in any of the preceding claims, wherein at least one heating element (30) comprises a heat generation portion (34) enclosed inside a tube (32) and a wall (32a) for the tube (32) also defines the fluid heating spaces and is in direct contact with the fluid flowing through the fluid heating spaces.

6. The electrical fluid heater (100) as claimed in the previous claim, wherein the tube (32) is a metal extruded tube and an electrical isolating material (38) electrically isolates the heat generation portion (34) from the tube (32).

7. The electrical fluid heater (100) as claimed in the previous claim, wherein periphery of the at least one opening (41a, 41 b) formed on the plate (40) is brazed on the tube wall (32a) on one side of the heating element (30) and the periphery of the opening (41a, 41b) formed on the adjacent plate (40) is brazed on the tube wall (32a) on another side of the heating element (30), thereby sealingly closing the fluid heating spaces.

8. The electrical fluid heater (100) as claimed in the claim 2, wherein the first opening (41a) and the second opening (41b) are separated and in fluid isolation with respect to each other by means of a rib (49), the rib (49) cooperating with another adjacent plate (40), thereby defining the different fluid circulation sections (40a,40b) of the plate (40).

9. The electrical fluid heater (100) as claimed in any of the preceding claims, wherein the at least one opening (41a, 41b) covers at least 50 percent, in particular 70 percent and preferably 80 percent of the plate (40).

10. The electrical fluid heater (100) as claimed in claim 2, wherein the first openings (41a) on adjacent plates (40) forming the fluid heating spaces with respect to the corresponding heating element (30) are aligned with respect to each other.

11. The electrical fluid heater (100) as claimed in claim 2, wherein the second openings (41b) on adjacent plates (40) forming the fluid heating space with respect to the corresponding heating element (30) are aligned with respect to each other.

12. The electrical fluid heater (100) as claimed in claim 2, wherein the first openings (41a) and the second openings (41b) on adjacent plates (40) comprise rib portions formed along a periphery thereof to facilitate brazing connection between the adjacent plates (40).

## Patentansprüche

1. Elektrischer Flüssigkeitserhitzer (100), der Folgendes umfasst:
• einen Flüssigkeitseinlass (12a) und einen Flüssigkeitsauslass (12b);
• zumindest ein Heizelement (30)
• mehrere Platten (40), gestapelt zum Bilden eines Flüssigkeitsströmungspfads zwischen dem Flüssigkeitseinlass (12a) und dem Flüssigkeitsauslass (12b), damit die Flüssigkeit durch das zumindest eine Heizelement erhitzt wird, wobei das zumindest eine Heizelement (30) zwischen angrenzenden Platten (40) platziert ist, dadurch Flüssigkeitsheizräume von beiden Seiten des zumindest einen Heizelements definierend, um Wärmeaustausch zwischen der Flüssigkeit, die durch die Flüssigkeitsheizräume strömt, und dem zumindest einen Heizelement (30) zu ermöglichen,
**dadurch gekennzeichnet, dass** jede der Platten (40) zumindest eine Öffnung (41a, 41b) umfasst, insbesondere auf einem wesentlichen Teil davon gebildet, sodass die Flüssigkeit, die durch die Flüssigkeitsheizräume strömt,
in direktem Kontakt mit den Heizelementen (30) ist.

2. Elektrischer Flüssigkeitserhitzer (100) nach dem vorhergehenden Anspruch, wobei die Platten (40) Flüssigkeitszirkulationsabschnitte (40a, 40b) umfassen, wobei zumindest ein Abschnitt (40a, 40b) mit einer entsprechenden Öffnung (41a, 41b) gebildet ist.

3. Elektrischer Flüssigkeitserhitzer (100) nach dem vorhergehenden Anspruch, ferner umfassend eine erste Endplatte (10) und eine zweite Endplatte (20), wobei die erste Endplatte (10) einen ersten Teil (10a) und einen zweiten Teil (10b) umfasst, wobei der erste Teil (10a) der ersten Endplatte (10) ersten Flüssigkeitszirkulationsabschnitten (40a) der Platten (40) entspricht und mit dem Einlass (12a) gebildet ist, wohingegen der zweite Teil (10b) der ersten Endplatte den zweiten Flüssigkeitszirkulationsabschnitten (40b) der Platten (40) entspricht und mit dem Auslass (12b) gebildet ist, wobei die ersten Flüssigkeitszirkulationsabschnitte (40a) der Platten (40) fluidisch gekoppelte erste Flüssigkeitsströmungsdurchgänge definieren, angepasst zum Aufnehmen von Flüssigkeit vom Einlass (12a) zum Wärmeaustausch mit den Heizelementen (30), und die zweiten Flüssigkeitszirkulationsabschnitte (40b) der Zwischenplatten (40) fluidisch gekoppelte zweite Flüssigkeitsströmungsdurchgänge definieren, angepasst zum Fördern von Flüssigkeit zum Auslass (12b) nach dem Wärmeaustausch mit den Heizelementen (30).

4. Elektrischer Flüssigkeitserhitzer (100) nach einem der vorhergehenden Ansprüche, umfassend mehrere Heizelemente (30), wobei jedes Heizelement (30) zwischen angrenzenden Platten (40) platziert ist, dadurch Flüssigkeitsheizräume von beiden Seiten des zumindest einen Heizelements definierend.

5. Elektrischer Flüssigkeitserhitzer (100) nach einem der vorhergehenden Ansprüche, wobei zumindest ein Heizelement (30) einen Wärmeerzeugungsteil (34) umfasst, der in das Innere eines Rohres (32) eingeschlossen ist, und wobei eine Wand (32a) für das Rohr (32) auch die Flüssigkeitsheizräume definiert und in direktem Kontakt mit der Flüssigkeit ist, die durch die Flüssigkeitsheizräume strömt.

6. Elektrischer Flüssigkeitserhitzer (100) nach dem vorhergehenden Anspruch, wobei das Rohr (32) ein extrudiertes Metallrohr ist und ein elektrisch isolierendes Material (38) den Wärmeerzeugungsteil (34) elektrisch vom Rohr (32) isoliert.

7. Elektrischer Flüssigkeitserhitzer (100) nach dem vorhergehenden Anspruch, wobei der Umfang der zumindest einen Öffnung (41a, 41b), die auf der Platte (40) gebildet ist, an der Rohrwand (32a) auf einer Seite des Heizelements (30) angelötet ist und der Umfang der Öffnung (41a, 41b), die auf der angrenzenden Platte (40) gebildet ist, an der Rohrwand (32a) auf einer anderen Seite des Heizelements (30) angelötet ist, dadurch die Flüssigkeitsheizräume dichtend schließend.

8. Elektrischer Flüssigkeitserhitzer (100) nach Anspruch 2, wobei die erste Öffnung (41a) und die zweite Öffnung (41b) mittels einer Rippe (49) voneinander getrennt und in fluidischer Isolation zueinander sind, wobei die Rippe (49) mit einer anderen angrenzenden Platte (40) zusammenwirkt, dadurch die unterschiedlichen Flüssigkeitszirkulationsabschnitte (40a, 40b) der Platte (40) definierend.

9. Elektrischer Flüssigkeitserhitzer (100) nach einem der vorhergehenden Ansprüche, wobei die zumindest eine Öffnung (41a, 41b) mindestens 50 Prozent, insbesondere 70 Prozent und vorzugsweise 80 Prozent der Platte (40) bedeckt.

10. Elektrischer Flüssigkeitserhitzer (100) nach Anspruch 2, wobei die ersten Öffnungen (41a) auf angrenzenden Platten (40), die die Flüssigkeitsheizräume bezüglich des entsprechenden Heizelements (30) bilden, bezüglich zueinander ausgerichtet sind.

11. Elektrischer Flüssigkeitserhitzer (100) nach Anspruch 2, wobei die zweiten Öffnungen (41b) auf angrenzenden Platten (40), die den Flüssigkeitsheizraum bezüglich des entsprechenden Heizelements (30) bilden, bezüglich zueinander ausgerichtet sind.

12. Elektrischer Flüssigkeitserhitzer (100) nach Anspruch 2, wobei die ersten Öffnungen (41a) und die zweiten Öffnungen (41b) auf angrenzenden Platten (40) Rippenteile umfassen, die entlang eines Umfangs davon gebildet sind, um eine Lötverbindung zwischen den angrenzenden Platten (40) zu ermöglichen.

## Revendications

1. Appareil électrique de chauffage de fluide (100) comprenant :
• une entrée de fluide (12a) et une sortie de fluide (12b) ;
• au moins un élément chauffant (30) ;
• une pluralité de plaques (40) empilées pour former un chemin d'écoulement de fluide entre l'entrée de fluide (12a) et la sortie de fluide (12b) pour le chauffage du fluide par l'au moins un élément chauffant, l'au moins un élément chauffant (30) étant intercalé entre des plaques (40) adjacentes de façon à définir ainsi des espaces de chauffage de fluide de chaque côté de l'au moins un élément chauffant afin de permettre un échange thermique entre le fluide s'écoulant à travers les espaces de chauffage de fluide et l'au moins un élément chauffant (30),
**caractérisé en ce que** chacune des plaques (40) comprend au moins une ouverture (41a, 41b), en particulier formée sur une grande partie de celle-ci, de telle sorte que le fluide s'écoulant à travers les espaces de chauffage de fluide soit en contact direct avec les éléments chauffants (30) .

2. Appareil électrique de chauffage de fluide (100) selon la revendication précédente, dans lequel les plaques (40) comprennent des sections de circulation de fluide (40a, 40b), au moins une section (40a, 40b) étant formée de façon à comporter une ouverture (41a, 41b) correspondante.

3. Appareil électrique de chauffage de fluide (100) selon la revendication précédente, comprenant, en outre, une première plaque d'extrémité (10) et une seconde plaque d'extrémité (20), dans lequel la première plaque d'extrémité (10) comprend une première partie (10a) et une seconde partie (10b), la première partie (10a) de la première plaque d'extrémité (10) correspondant aux premières sections de circulation de fluide (40a) des plaques (40) et étant formée de façon à comporter l'entrée (12a), tandis que la seconde partie (10b) de la première plaque d'extrémité correspond aux secondes sections de circulation de fluide (40b) des plaques (40) et est formée de façon à comporter la sortie (12b), dans lequel les premières sections de circulation de fluide (40a) des plaques (40) définissent des premiers passages d'écoulement de fluide en accouplement fluidique, propres à recevoir du fluide au niveau de l'entrée (12a) pour un échange thermique avec les éléments chauffants (30), et les secondes sections de circulation de fluide (40b) des plaques intermédiaires (40) définissent des seconds passages d'écoulement de fluide en accouplement fluidique, propres à débiter du fluide au niveau de la sortie (12b) après l'échange thermique avec les éléments chauffants (30).

4. Appareil électrique de chauffage de fluide (100) selon l'une quelconque des revendications précédentes, comprenant une pluralité d'éléments chauffants (30), chacun des éléments chauffants (30) étant intercalé entre des plaques (40) adjacentes de façon à définir ainsi des espaces de chauffage de fluide de chaque côté de l'au moins un élément chauffant.

5. Appareil électrique de chauffage de fluide (100) selon l'une quelconque des revendications précédentes, dans lequel au moins un élément chauffant (30) comprend une partie de génération de chaleur (34) logée à l'intérieur d'un tube (32) et une paroi (32a) du tube (32) définit également les espaces de chauffage de fluide et est en contact direct avec le fluide s'écoulant à travers les espaces de chauffage de fluide.

6. Appareil électrique de chauffage de fluide (100) selon la revendication précédente, dans lequel le tube (32) est un tube en métal extrudé et un matériau électriquement isolant (38) isole électriquement la partie de génération de chaleur (34) relativement au tube (32) .

7. Appareil électrique de chauffage de fluide (100) selon la revendication précédente, dans lequel la périphérie de l'au moins une ouverture (41a, 41b) formée sur la plaque (40) est brasée sur la paroi du tube (32a) sur un côté de l'élément chauffant (30) et la périphérie de l'ouverture (41a, 41b) formée sur la plaque (40) adjacente est brasée sur la paroi du tube (32a) sur un autre côté de l'élément chauffant (30), de façon à fermer ainsi hermétiquement les espaces de chauffage de fluide.

8. Appareil électrique de chauffage de fluide (100) selon la revendication 2, dans lequel la première ouverture (41a) et la seconde ouverture (41b) sont séparées et fluidiquement isolées l'une de l'autre au moyen d'une nervure (49), la nervure (49) coopérant avec une autre plaque (40) adjacente, de façon à définir ainsi les différentes sections de circulation de fluide (40a, 40b) de la plaque (40).

9. Appareil électrique de chauffage de fluide (100) selon l'une quelconque des revendications précédentes, dans lequel l'au moins une ouverture (41a, 41b) couvre au moins 50 pour cent, en particulier 70 pour cent et, de préférence, 80 pour cent de la plaque (40).

10. Appareil électrique de chauffage de fluide (100) selon la revendication 2, dans lequel les premières ouvertures (41a) sur des plaques (40) adjacentes formant les espaces de chauffage de fluide relativement à l'élément chauffant (30) correspondant sont mutuellement alignées.

11. Appareil électrique de chauffage de fluide (100) selon la revendication 2, dans lequel les secondes ouvertures (41b) sur des plaques (40) adjacentes formant l'espace de chauffage de fluide relativement à l'élément chauffant (30) correspondant sont mutuellement alignées.

12. Appareil électrique de chauffage de fluide (100) selon la revendication 2, dans lequel les premières ouvertures (41a) et les secondes ouvertures (41b) sur des plaques (40) adjacentes comprennent des parties formant nervures formées le long d'une périphérie de celles-ci pour faciliter le raccordement par brasage entre les plaques (40) adjacentes.
